# EUROPEAN PATENT APPLICATION

(11) **EP 1 199 817 A1**
(43) Date of publication of application: **24.04.2002**
(21) Application number: 00949889.0
(22) Date of filing: 26.07.2000
(51) Int. Cl.: H04B 7/15, H04B 7/26, H04J 13/00

(54) **TRANSMISSION SYSTEM OF HIGH SPEED SIGNAL IN APPARATUS**

(30) Priority: 30.07.1999 JP 21760899
(71) Applicant: NEC Corporation, Minato-ku, Tokyo 108-8001 (JP)
(72) Inventor: OHMURA, Hideo, c/o Nec Corporation, Minato-ku, Tokyo 108-8001 (JP)
(74) Representative: Betten & Resch
(86) International application number: JP0004962
(87) International publication number: WO0110058

(57) **Abstract**

The number of paths interconnecting transmitting/receiving sections and channel sections are decreased. Two repeating switching sections (REP3-O, REP3-E) are provided between a group of transmitting/receiving sections (TRX1-1 to TRX1-N) and a group of channel sections (CH2-10, CH2-1E to CH2-MO, CH2-ME). The transmitting/receiving sections (TRX) and the repeating switching sections (REP) are interconnected, the channel sections (CH) and the repeating switching sections (REP) are separated into group O and group E. Connection paths are provided for the respective groups. For example, 2 (N+M) connection paths are provided between the repeating switching section (REP3-0) and the channel sections (CH2-10 to CH2-MO). Furthermore, the channel sections (CH) are grouped into pairs of O/Es having the same suffix numbers and each juxtaposed. Interchannel transmission lines (4-1 to 4-M) for transmitting/receiving transmission signals between the channel section (CH) and the repeating switching sections (REP) are formed of back wiring.

## Description

### FIELD OF THE INVENTION

The present invention relates to a transmission system of spread-processed high speed signal which is handled in apparatus such as CDMA apparatus, and relates to a transmission system of high speed signal in apparatus, which is provided with transmitting/receiving sections corresponding to each of a plurality of sectors and a channel sections for processing a base band signal corresponding to a plurality of channels and which transmits the high speed signal between the transmitting/receiving sections and the channel sections, and more particularly, relates to a transmission system of high speed signal in apparatus, in which hand-over between the sectors is easily carried out and which is capable of reducing the number of signal lines interconnecting the transmitting/receiving sections and the channel sections and is capable of achieving high reliability.

### BACKGROUND OF THE INVENTION

In case where a spread-processed high speed signal is operated in apparatus such as CDMA apparatus, an interface between transmitting/receiving sections provided with a card form and channel sections for processing a base band signal, and a function share of the sections are important from the stand point of apparatus construction, because signal speed is very high. Further, high reliability is required to the high speed signal handled in the apparatus.

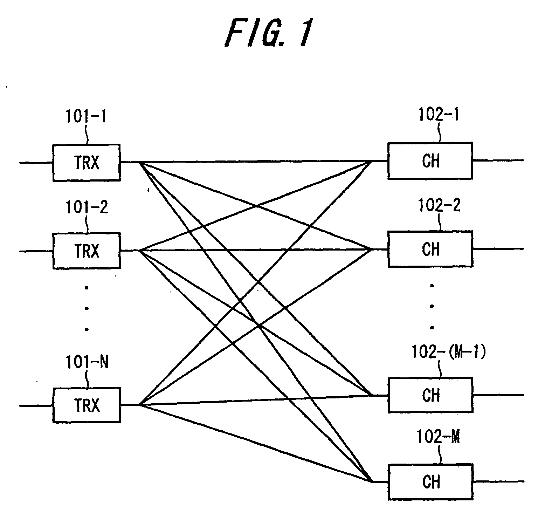

According to conventional transmission system of high speed signal in the apparatus, the transmitting/receiving sections (TRX) 101 and the channel sections (CH) 102 are directly interconnected, as shown in Fig. 1. That is, optional transmitting/receiving sections (TRX) 101 and optional channel sections (CH) 102 are connected to each other in order to comply with the above requirements and the hand-over between sectors. Accordingly, the number of connection paths for communication to be required is (N M) which is the product of the transmitting/receiving sections (TRX) 101-1 to -N and the channel sections (CH) 102-1 to -M.

There are problems as described below in the above conventional transmission system of high speed signal in apparatus.

A first problem is that the hand-over processing accompanied by a sector transfer between transmitting/receiving) sections and channel sections is complicated. The reason is that one connection point for communication is selected from many transmitting/receiving sections provided with a card form and many channel sections, respectively.

A second problem is that a trouble or failure ratio in apparatus is high due to large size of the apparatus. The reason is that the number of paths interconnecting the transmitting/receiving sections and the channel sections is a product of the number of these sections and, as a result, interface circuits of the same numbers exist.

An object of the invention is to provide a transmission system of high speed signal in apparatus which is capable of reducing the number of paths interconnecting the transmitting/receiving sections and the channel sections.

### DISCLOSURE OF THE INVENTION

According to the invention, a transmission system of high speed signal in apparatus comprises providing transmitting/receiving sections corresponding to each of a plurality of sectors and channel sections for processing base band signals corresponding to a plurality of channels in the apparatus; transmitting the high speed signal between the transmitting/receiving sections and the channel sections; further providing a plurality of repeating switching sections of which the number is less than that of the transmitting/receiving sections; connecting all of the transmitting/receiving sections to one end of all repeating switching sections to transmit/receive the high speed signal; connecting all of the channel sections to the other end of all repeating switching sections to transmit/receive the high speed signal; and switching the interconnection of the transmitting/receiving sections and the channel sections by the repeating switching sections to repeat the high speed signal. Thus, the number of paths interconnecting the transmitting/receiving sections and the channel sections can be reduced by inserting the few number of the repeating switching sections between the transmitting/receiving sections and the channel sections to make the interconnection paths. In each function processing section constructed by the transmitting/receiving sections, the channel sections and the repeating switching sections, the number of interconnection paths for communication of the transmission signal has been reduced and the selection number of interconnection paths to be switched is less, and therefore, the hand-over between the sectors of high speed serial signals can be easily and quickly realized. Accordingly, constructions suitable for serial signals with higher speed can be provided.

Further, the construction of the channel sections makes smaller than conventional construction by providing the repeating switching sections with a spreading circuit for spread-processing a downstream signal from a host processor to a mobile terminal. As a result, whole size of the apparatus becomes smaller.

The interconnection paths will be concretely explained. The channel sections may be connected to the other end of all repeating switching sections. And, the channel sections may be divided in groups corresponding to the repeating switching sections and a group of the channel sections corresponding to the repeating switching sections may be connected to the other end of the repeating switching sections. It is preferred that two of the repeating switching sections are used in a pair and one of them can be used where the other of them is failure, because the number of the interconnection paths between the repeating switching sections and the channel sections can be reduced.

In the case, it is preferred that two of the channel sections are used in a pair, each of which can be connected to different repeating switching sections, and that a pair of the channel sections have a transmission path which can mutually transmit/receive signals and the signals to be transmitted/received to or from the repeating switching sections are transmitted/received through the transmission path and either of the pair of the channel sections where the other of the pair of the repeating switching sections to be connected is failure. It is also preferred that a pair of repeating switching sections have a signal transmission path for interconnecting therebetween, and that the signals to be transmitted/received to or from the channel sections are transmitted/received through the transmission path and the other of the pair of the repeating switching sections, where inside of the repeating switching section is failure.

### BRIEF EXPLANATION OF THE DRAWINGS

Fig. 1 is a functional block diagram showing a conventional example.
Fig. 2 is a functional block diagram showing an embodiment of the invention.
Fig. 3 is a functional block diagram showing an embodiment of each functional processing section in Fig. 2.
Fig. 4 is a block diagram illustrating redundancy operations to upstream signal in Fig. 2.
Fig. 5 is a block diagram illustrating redundancy operations to downstream signal in Fig. 2.
Fig. 6 is a functional block diagram showing an embodiment of the invention different from the embodiment shown in Fig. 2.
Fig. 7 is a functional block diagram showing an embodiment of the invention different from the embodiments shown in Figs. 2 and 6.

### THE BEST EMBODIMENTS FOR PERFORMING THE INVENTION

The embodiments of the invention will be explained referring to the drawings.

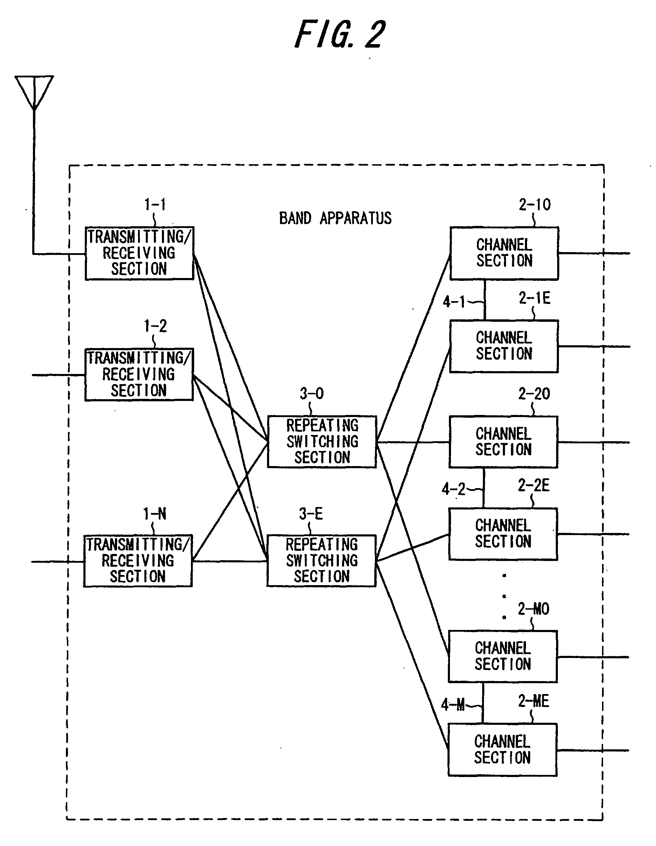

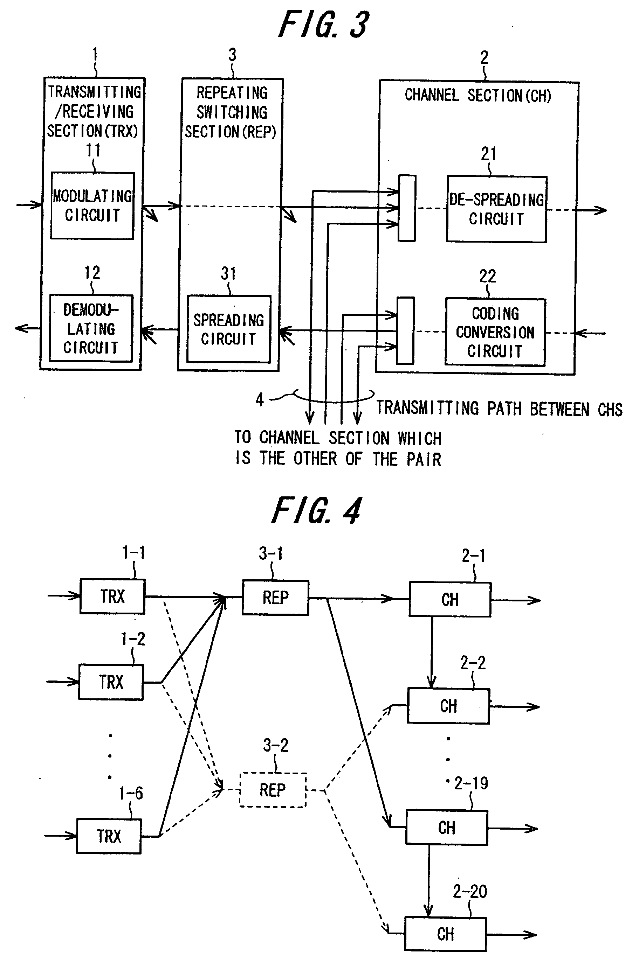

Fig. 2 is a functional block diagram showing an embodiment of the invention and Fig. 3 is a functional block diagram showing an embodiment of each functional section in Fig. 2. The graphically expressed construction is only a form of signal transmission path in the invention, and transmission/reception of control information regarding other connections is omitted in the drawings and explanation because various well-known techniques can be used for it.

In the transmission system of high speed signal in apparatus shown in Fig. 2, transmitting/receiving sections (hereinafter called TRX) 1-1 to 1-N for transmitting/ receiving a wireless signal corresponding to each of the "N" number of sectors, channel sections (hereinafter called CH) 2-1O, 2-1E to 2-MO, 2-ME which are grouped into pairs of O/Es and are for processing a base band signal corresponding to the "2M" number of channels, and two repeating switching sections (hereinafter called REP) 3-O, 3-E to be provided between these sections are provided in band apparatus.

These are made in the form of card. TRX1 is composed of N sheets of TRX cards, CH2 is composed of 2M sheets of TRX cards, and REP3 is composed of two sheets of REP cards.

The N sheets of TRX1 have the connection paths with all of two sheets of REP3. Of the 2M sheets of CH2, the M sheets of CH2-10 to CH2-MO have the connection paths with REP3-O, and the M sheets of CH2-1E to CH2-ME have the connection paths with REP3-E. Two sheets of CH cards forming a pair of O/Es have the transmission paths 4-1 to 4-M which are formed of back wiring.

A high speed signal to be transmitted in a band apparatus is composed of an upstream signal which is from a mobile terminal to a host processor, and a downstream signal which is from the host processor to the mobile terminal.

As shown in Fig. 3, TRX1 is provided with demodulation circuit 11 for demodulating an upstream wireless signal of CDMA system received from mobile terminals through antennas which are provided in each sector to a high speed base band signal. The demodulated signal is transmitted through REP3 to CH2 in apparatus. TRX1 is also provided with modulation circuit 12 for modulating a spread-processing base band signal received from REP3 to a wireless signal. The modulated signal is transmitted through antennas of each sector.

CH2 is provided with a de-spreading circuit 21 for decoding an upstream base band signal received from REP3 by de-spreading. The decoded signal is transmitted to a host processor. CH2 is also provided with a coding conversion circuit 22 for coding a downstream signal received from a host processor per transmission path and converting it into a wireless signal format. The converted coding signal is transmitted to REP3.

REP3 transmits all of upstream base band signals received from TRX1 to CH2. REP3 is provided with a spreading circuit 31 for spread-processing a downstream coding signal received from CH2. The spread-processed base band signal is transmitted to one or more TRX1 set to each customer. A pair of CH2 have a signal transmission path 4 for interconnecting between CHs. An upstream signal received from REP3 is transmitted from one of a pair of CH2 to the other of the pair of CH2 and a downstream signal transmitted to REP3 is transmitted from one of a pair of CH2 to the other of the pair of CH2. Namely, a redundancy construction that, where communication is interrupted through one of REP3, the other operates instead of it is adopted. According to the construction, transmitting volume of signal between CH2 and REP3 is two times as much as that of one of CH2.

Referring to Figs . 4 and 5, redundancy function operation will be explained where communication through one of REP3-E in Fig. 2 is interrupted.

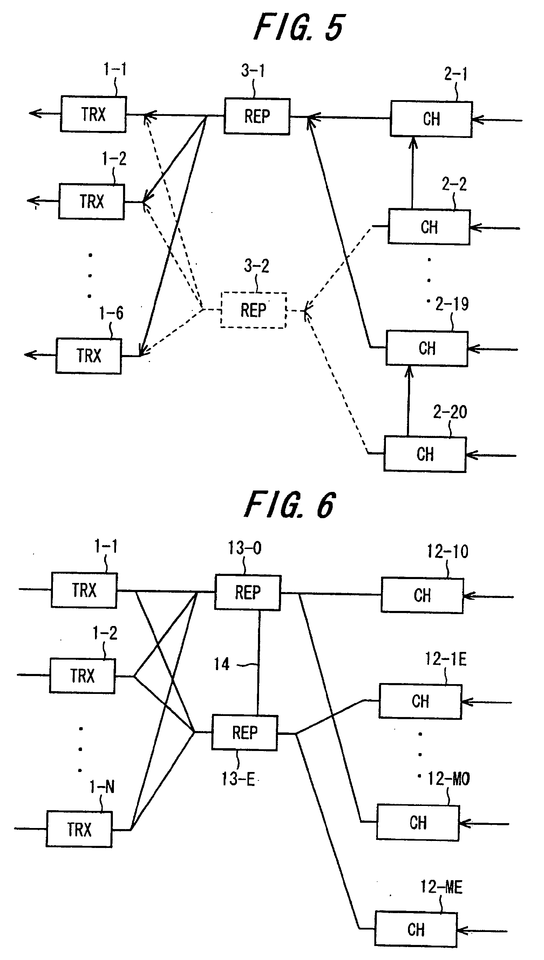

In the example shown in Figs. 4 and 5, six TRXs (TRX1-1 to TRX1-6), twenty CHs (CH2-1 to CH2-20) and two REPs (REP3-1 to REP3-2) are provided, and a connection path is formed between REP3 and CH2 through an odd number group or an even number group, each of which is composed of an odd suffix number or an even suffix number. A pair of CH2 is composed of an odd suffix number and an even suffix number which is one plus the odd suffix number.

In case where upstream signal is interrupted in REP3-2 as shown in Fig. 4, REP3-1 which belongs to a group of the odd suffix number relays reception signals received from all of TRX1-1 to TRX1-6 and transmits them to CH2-1, CH2-3 to CH2-19 which belong to a group of the odd suffix number, respectively. Although reception signal from REP3-2 is not transmitted to CH2-2, CH2-4 to CH2-20 which belong to a group of the even suffix number, reception signals received from TRX1-1 to TRX1-6 can be transmitted from CH with the odd suffix number, which is one of the pair of CH with the even suffix number, through transmission path for interconnection between CHs.

Fig. 5 shows an embodiment that downstream signal is interrupted in REP3-2, and although each of CH2-2, CH2-4 to CH2-20 which belongs to a group of the even suffix number can not transmit signal to be transmitted to REP3-2, it can transmit the signal to each of CH with the odd suffix number which is one of the pair of CH with the even suffix number. Each of CH2-1, CH2-3 to CH2-19 which belongs to a group of the odd suffix number and is the other of the pair transmits transmission signal received from CH with the even suffix number which is the pair, to REP3-1 together with its transmission signal. The transmission signal to be transmitted is transmitted to TRX1 by REP3-1.

According to the construction as described above, the number of connection path between each processing section made by a card becomes "2N + M" connection paths among N sheets of TRX and M sheets of CH to 2 sheets of REP. According to conventional construction in the same situation, it is required that the number of connection path is "N x M" paths. A transmission path interconnecting between CHs is interconnection of adjacent cards and is formed by back wiring, and therefore, its size is very small to a size of apparatus as a whole.

In an embodiment of Fig. 6, a transmission path 14 interconnecting between a pair of REPs is provided instead of the transmission path interconnecting between a pair of CHs. That is, REP13 - O is provided corresponding to CH12-1O to CH12-MO which belong to a group of the odd suffix number and of which the number is M, and REP13-E is provided corresponding to CH12-1E to CH12-ME which belong to a group of the even suffix number and of which the number is M. REP13-O and REP13-E can transmit/receive a transmission signal to be transmitted from and received to CH12 through the transmission path 14 between REPs to REP13-E and REP13-O which are the other of the pair, respectively. The transmission signal between CH and REP can be transmitted through the transmission path between the REPs, avoiding one of the REP through which communication is interrupted. In the construction, the number of connection path is reduced by subjecting REPs to be adjacent and as a result, size reduction of apparatus can be achieved.

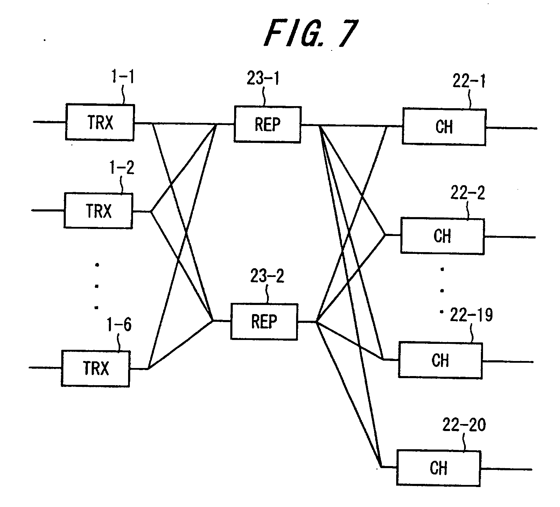

Referring to Fig. 7, a different example from the embodiment shown in Fig. 6 will be explained. In the construction as shown in the drawing, each CH and each REP are connected as well as each TRX and each REP are connected. In the case, although the number of connection path is more than that in above embodiment, the number of connection path between each processing section formed by the card is "2(N+M)" paths between N sheets of TRXs and M sheets of CHs to 2 sheets of REPs. Namely, the number of connection path in the example is less than "N+M" which is the number of conventional connecting construction.

As above explanation of the embodiments of the invention, the construction of the invention is characterized that the small number of repeating switching sections (REP) are provided between channel sections (CH) and transmitting/receiving sections (TRX), and that the connection path is provided through the repeating switching sections (REP). It is to be understood that changes and variations in more detailed connection ways may be made without departing from the above function and the invention should not be limited to the above explanation. Particularly, more effects of the invention can be obtained by dividing the repeating switching sections (REP) and channel sections (CH) into two groups, respectively and by making interconnection of adjacent cards transmission path of back wiring. As a result, the number of connection paths can be more reduced.

### INDUSTRIAL AVAILABILITY

Firstly, the invention is useful because sector hand-over between the channel sections (CH) and the transmitting/receiving sections (TRX) can be easily achieved. The reason is that the number of connection paths is more reduced in each functional processing section which transmits a high speed signal between the channel sections (CH) and the transmitting/receiving sections (TRX) through the repeating switching sections (REP) .

Secondary, the invention is useful because size of apparatus is reduced and ratio of failure is reduced. The reason is that the number of connection path between the channel sections (CH) and the transmitting/receiving sections (TRX) can be reduced through the repeating switching sections (REP) by providing the small number of the repeating switching sections (REP) and by providing signal transmission path between the channel sections (CH) or the transmitting/receiving sections (TRX) as a pair construction.

Thirdly, the invention is useful because high reliability is obtained by complete present/preliminary redundancy construction in spite of less connection path. The reason is that even if one of the repeating switching sections (REP) is interrupted, communication path is kept through the other of the repeating switching sections (REP) by dividing the channel sections (CH) adjacent to each other and two of the repeating switching sections (REP) into two groups, respectively and by transmitting/receiving a transmission signal to be transmitted/received between the repeating switching sections (REP), between the adjacent channel sections (CH).

## Claims

1. In a transmission system of high speed signal in apparatus in which a transmitting/receiving section corresponding to each of a plurality of sectors and a channel section for processing a base band signal corresponding to a plurality of channels are provided, said high speed signal being transmitted between the transmitting/receiving section and the channel section, the improvement which comprises;
further providing a plurality of repeating switching sections in the apparatus, of which the number is less than the number of the transmitting/receiving sections,
connecting all of the transmitting/receiving sections to either end of the repeating switching sections to transmit/receive the high speed signal,
connecting the channel sections to the other end of the predetermined repeating switching sections to transmit/receive the high speed signal, and
switching the interconnection between the transmitting/receiving sections and the channel sections by the repeating switching sections to switch the high speed signal.

2. The transmission system of high speed signal in apparatus according to Claim 1 wherein the repeating switching section has a spreading circuit for spread-processing a downstream signal from a host processor to a mobile terminal.

3. The transmission system of high speed signal in apparatus according to Claim 1 wherein the channel section is connected to the other end of all the repeating switching sections.

4. The transmission system of high speed signal in apparatus according to Claim 1 wherein the channel section is divided into groups corresponding to repeating switching section and is connected to the other end of only the repeating switching section corresponding thereto.

5. The transmission system of high speed signal in apparatus according to Claim 4 wherein two of the repeating switching sections are provided as a pair and where one of them is trouble, the other is operated.

6. The transmission system of high speed signal in apparatus according to Claim 5 wherein two of the channel sections are made as a pair and each of the pair is connected to the separate repeating switching sections.

7. The transmission system of high speed signal in apparatus according to Claim 6 wherein a pair of the channel sections have a transmission path for transmitting/receiving a signal with each other, and transmit and receive a signal to be transmitted from and received to the repeating switching sections through the transmission path and the channel section which is the other of the pair, where the repeating switching sections directly connected thereto are trouble.

8. The transmission system of high speed signal in apparatus according to Claim 6 wherein a pair of the repeating switching sections have a signal transmission path to be connected to each other, and transmit and receive a signal to be transmitted from and received to the channel section through the transmission path and the repeating and switching section which is the other of the pair, where inside of the repeating and switching section is trouble.
